Europäisches Patentamt

European Patent Office

Office européen des brevets

(11) Numéro de publication: **0 278 195 B1**

(12) **FASCICULE DE BREVET EUROPEEN**

(45) Date de publication de fascicule du brevet: **22.04.92** (51) Int. Cl.⁵: **G06K 7/08**, G06K 7/015

(21) Numéro de dépôt: **87402947.3**

(22) Date de dépôt: **22.12.87**

(54) **Tête magnétique de lecture ou écriture de cartes à piste magnétique.**

(30) Priorité: **16.01.87 FR 8700475**

(43) Date de publication de la demande:
**17.08.88 Bulletin 88/33**

(45) Mention de la délivrance du brevet:
**22.04.92 Bulletin 92/17**

(84) Etats contractants désignés:
**CH DE ES FR GB IT LI NL SE**

(56) Documents cités:
**FR-A- 2 503 907**
**US-A- 3 413 627**
**US-A- 3 836 753**

(73) Titulaire: **BULL S.A.**
**121 avenue de Malakoff P.B. 193.16**
**F-75764 Paris Cédex 16(FR)**

(72) Inventeur: **Buys, Henri**
**121 Avenue de Malakoff**
**F-75116 Paris(FR)**

(74) Mandataire: **Colombe, Michel et al**
**Bull S.A. Industrial Property Department**
**P.C.: HO 8M006 B.P. 193.16 121 avenue de**
**Malakoff**
**F-75764 Paris Cédex 16(FR)**

## Description

La présente invention concerne une tête magnétique pour cartes à piste magnétique. Le genre de tête utilisé dans l'invention est une tête télescopique et oscillante.

Dans l'art antérieur, on a réalisé des lecteurs de cartes magnétiques dans lesquels la carte magnétique est introduite dans une fente pour lecture/écriture de la piste qu'elle porte. Pour réaliser des opérations de lecture/écriture, le lecteur est muni d'au moins une tête magnétique dont la surface active est disposée aussi près que possible du chemin de la carte. A cette fin, la carte vient généralement en frottement sur la tête de lecture qui subit donc un effort de déplacement. Les premières têtes fixes des appareils de l'art antérieur subissaient donc une usure, due à une pression importante pour rattraper les déformations des cartes, qui allait parfois même jusqu'à la détérioration de la carte et de la tête. Dans une seconde étape, on a utilisé des têtes télescopiques et oscillantes. Or, la tête, munie de moyens élastiques de rappel, présente un régime d'oscillations parasites au passage de la carte. Dans certains cas, les oscillations parasites entraînent de mauvaises lectures ou de mauvais enregistrements sur la piste magnétique. Mais la plupart de ces têtes présente un défaut de linéarité, les mouvements de la carte causant une réaction de la tête réalisée par un déplacement hors de l'axe normal de lecture/écriture.

Il est connu des systèmes de guidage télescopique et oscillant tels que ceux enseignés par le brevet US 3,836,753 et la demande de brevet français 2.503.907 dans lesquelles un ensemble de billes disposées selon 4 directions sont placées dans des logements appartenant, soit à la tête soit au support de tête, pour positionner celle-ci. Les dispositifs du brevet US et de la demande de brevet français permettent certes les mouvements télescopiques et les mouvements d'oscillation dans une moindre mesure, sans pour autant assurer un positionnement précis de la tête par rapport à une face de référence.

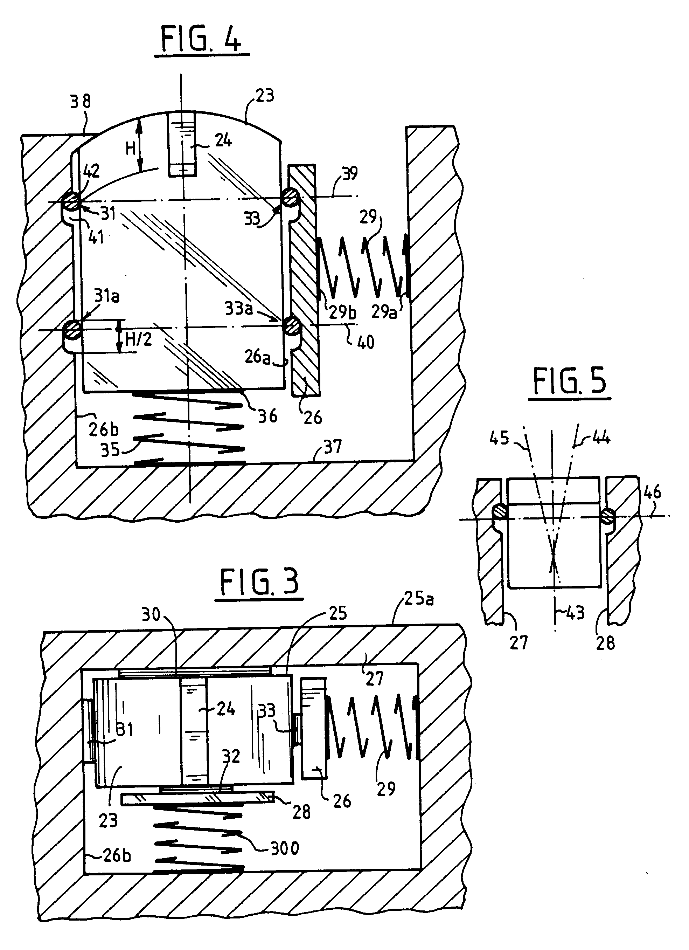

Le brevet US 3,413,627 enseigne un système de guidage permettant un positionnement précis de la tête par rapport à une face de référence, permettant les mouvements télescopiques qui permettant à la tête d'entrer et de sortir plus ou moins du logement, sans pour autant permettre les mouvements oscillant par rapport à un point de pivotement tel que représenté à la figure 5. De plus, ce système ne permet pas d'avoir une force télescopique constante.

La présente invention a pour but de pallier les inconvénients de l'art antérieur en proposant une tête télescopique linéaire permettant une correction des mouvements télescopiques et d'oscillation, tout en assurant le positionnement de la tête de façon précise par rapport à une face de référence et en ayant un dispositif simple à fabriquer ne nécessitant aucune intervention sur la tête magnétique.

Ce but est atteint par le fait que l'invention consiste en une tête magnétique pour lecteur de cartes à piste magnétique du type télescopique, du type comportant un corps (23) mobile dans un bâti (26, 27, 28), le bâti contenant au moins un premier moyen de roulement (30) sans glissement le long d'un chemin de roulement sur au moins une face (25) de la tête et des premiers moyens de rappel élastique (300) destinés à assurer le rappel de la tête vers une face de référence (25a) du bâti, ledit bâti comportant une deuxième face (26b), perpendiculaire à la face de référence (25a) qui porte des seconds moyens de roulement (31) caractérisée en ce que ledit bâti comporte également une face mobile (26) qui porte des troisiémes moyens de roulement (33), cette face mobile (26) et ces troisièmes moyens de roulement (33) étant appuyés constamment sur le corps de la tête par un second moyen de rappel élastique (29), les seconds moyens de roulement sans glissement disposés sur la deuxième face (26b) perpendiculaire à la face de référence sont sur deux niveaux (39, 40), le bâti comporte deux faces parallèles (27,28) dans des plans perpendiculaires au plan d'entrefer, une première face fixe (27) et une seconde face mobile (28) soumise à l'action des moyens de rappel élastique (300), chaque face comportant au même niveau (46), au moins un moyen de roulement sans glissement (30 ou 32), le bâti est muni d'une butée (38) disposée sur la sortie de la deuxième face (26b) de manière à limiter la course de l'escamotage télescopique de la tête sollicitée par un troisième moyen élastique (35; 80) vers la carte.

D'autres caractéristiques et avantages de la présente invention seront mieux compris à l'aide de la description annexée et des figures qui sont :

- la Figure 1: un schéma d'un lecteur de cartes,
- les Figures 2A, 2B, 2C : des schémas de réalisation de tête selon l'art antérieur,
- la Figure 3 : une vue de dessus d'un schéma de tête selon l'invention,
- la Figure 4 : une vue de face d'une tête selon l'invention,
- la Figure 5 : une vue de côté de la tête selon l'invention,
- la Figure 6 : une variante d'exécution du bâti convenable pour une tête selon l'invention,
- la Figure 7 : un détail de réalisation d'une partie de la Figure 6,
- la Figure 8 : une variante de réalisation d'un moyen de l'invention,
- la Figure 9 : une variante de réalisation de l'invention.

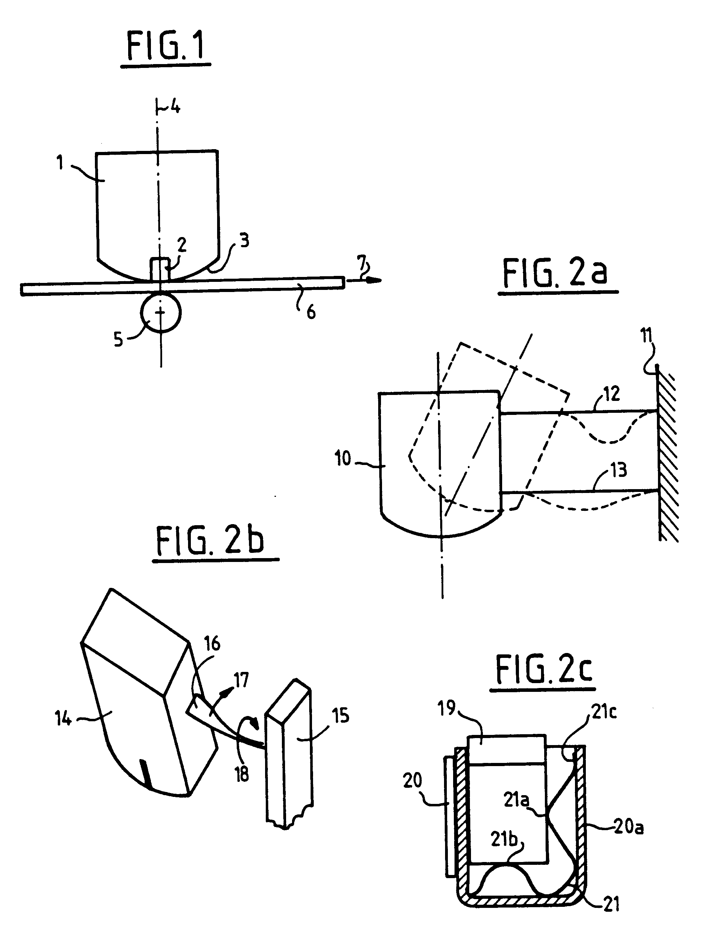

A la Figure 1, on a représenté un système classique de tête magnétique dans un lecteur de cartes à piste magnétique. La tête 1 comporte un entrefer 2 qui débouche sur une partie bombée 3 du corps de la tête. Cet entrefer est disposé dans un plan spécial dit plan d'entrefer repéré au dessin par le chiffre 4. En vis-à-vis de la tête 1, dans le lecteur, on dispose un galet presseur 5 qui permet, d'une part d'exercer un couple moteur sur la carte une fois celle-ci introduite dans le lecteur, et d'autre part de limiter la lame d'air qui s'interpose entre l'entrefer 2 et la piste magnétique à lire ou écrire. A cet effet, la carte 6 est introduite à travers la fente du lecteur dans l'intervalle séparant le galet presseur 5 de l'entrefer 2. La carte défile dans une direction dite direction 7 de défilement de cartes. Par exemple, dans un premier sens, celui de l'introduction de la carte, la tête écrit sur la piste, et dans le sens contraire, si la tête est activée en lecture, elle lit la piste.

Aux figures 2A à 2C, on a représenté trois modes de réalisation de têtes télescopiques et oscillantes selon l'art antérieur qui permettent de rattraper les déformations éventuelles de la carte utilisée en exerçant une pression sur la carte. A cet effet, à la figure 2A, on a prévu de monter la tête 10 sur un parallélogramme déformable constitué d'une part d'un châssis 11 lié au lecteur, et d'autre part de deux bras élastiques 12 et 13 liés d'une part au bâti 11 et d'autre part à la tête 10. Quand un effort est exercé sur la tête 10, celle-ci s'escamote dans la position pointillée en écrasant et déformant le parallélogramme. Dans un tel système, d'une part le déplacement télescopique (l'escamotage) n'est pas linéaire, d'autre part les conditions d'alignement de l'entrefer sur la piste ne sont pas facilement obtenues. D'autre part, des oscillations parasites apparaissent en utilisation intensive, surtout si on diminue la raideur du parallélogramme pour réduire les frottements sur la carte.

A la figure 2B, on a représenté un deuxième mode de réalisation de l'art antérieur selon lequel la tête 14 est montée sur un bâti 15 par l'intermédiaire d'une lame soupe 16 réalisée en métal flexible. Le bras mobile 16 permet d'une part un escamotage vertical par rotation selon l'arc 17, et d'autre part une rotation autour de l'axe 18, axe de symétrie du ruban constituant le bras 16. Cette disposition subit les mêmes inconvénients que ceux de la figure 2A et entraîne, comme le dispositif de la figure 2A, l'obligation de prévoir des fixations de parties externes comme les bras 12, 13 ou 16 sur la tête. On retrouve les problèmes de la tête de la figure 2a.

A la figure 2C, on a représenté une tête à escamotage télescopique et à déplacement linéaire. Sur un bâti 20, on fixe un carter 20a qui contient la tête magnétique proprement dite 19 et un ressort lame 21. Ce ressort a une géométrie en S déformée à 90° de manière à appuyer simultanément sur la face inférieure par une volute 21b et une face latérale par une volute 21a. Le ressort 21 peut être fixé par une extrémité 21c sur le carter. La volute 21b assure le rappel télescopique de la tête 19 sur la carte lire ou écrire. La volute 21a permet d'appuyer constamment la tête 19 sur une face de référence du carter. Les déplacements télescopiques sont donc bien linéaires. Mais c'est au prix de frottements importants de la tête 19 sur la face interne et le ressort 21. Le rendement mécanique de la tête est faible, limité par ce frottement. De plus, ce montage ne permet pas facilement de faire tourner la tête autour d'un axe perpendiculaire au plan de la figure 2C pour permettre de "suivre" les déformations éventuelles de la carte introduite dans le lecteur.

La figure 3 est une vue de dessus d'une tête magnétique selon l'invention. Une tête magnétique selon l'invention comporte un corps 23, dans lequel est prévu un entrefer dont le plan est repéré 24 au dessin, et un bâti qui comporte une face de référence 25a pour sa fixation au lecteur dans un plan perpendiculaire au plan d'entrefer 24. Les fabricants de tête magnétique vendent des produits par classes de précision garantissant la perpendicularité du plan d'entrefer (24) avec une face 25 du corps 23. Perpendiculairement au plan de l'entrefer, le bâti comporte une deuxième face fixe 27 disposée en regard d'une face 25 du corps 23. Les faces 26 et 28 du bâti sont mobiles sous l'action de ressorts 29, 30 qui constituent des moyens de rappel élastique qui permettent d'appuyer constamment le corps 23 sur ses références. Chacune des faces de références 26bis et 27 comporte des moyens de roulement 31, 33 qui permettent de réaliser les "mouvements désirés sans frottement de la tête magnétique en utilisation.

Les ressorts 29 et 30 sont à double effet pour d'une part assurer la poussée dans le sens correspondant à chacun d'eux, et d'autre part suivre le mouvement sans frottement de la tête sous l'action de l'autre ressort. Ils admettent le mouvement d'escamotage télescopique du corps 23 le long de l'axe perpendiculaire au plan de la carte dans le lecteur sans le gêner ni le dévier. Dans un second mode de réalisation, afin de faciliter l'entretien de la tête, chaque organe de roulement est disposé dans une cage qui permet de limiter son excursion. Ainsi il est possible, par exemple, de démonter la tête sans perdre les organes de roulement.

A la figure 4, on a représenté une vue de face de la tete selon l'invention représentée à la figure 3. Le plan d'entrefer 24 est vu sur sa tranche. Les moyens de roulement 31, 33 sont vus selon leur section sur cette vue. L'escamotage télescopique est assuré par le moyen d'un ressort travaillant en compression au cours de la lecture/écriture. Le repère 35 désigne ce ressort dont une extrémité repose sur le fond 36 du corps 23 et l'autre extrémité est liée au fond 37 du bâti.

Dans un autre mode de realisation représenté à la figure 9, le rappel élastique du mouvement d'escamotage télescopique est réalisé à l'aide d'une lame de ressort 80 qui travaille en flexion et est disposée par une de ses extrémités dans une encoche 83 d'une face de la tête et par l'autre à une face 81 fixe du bâti. Le ressort 80 est monté de telle sorte qu'il applique en permanence une force 84 d'appui du corps 82 sur la face de référence 26 bis du bâti et qu'il exerce un rappel élastique dans les deux sens 85 et 86 de la direction parallèle à l'axe d'escamotage télescopique. Dans un mode de réalisation, la paroi fixe 26 bis du bâti porte une butée 38 contre laquelle la partie bombée du corps 23 vient appuyer en course extrême. Cette butée est destinée à limiter la course de la tête par exemple pour éviter tout contact sur le galet 5, voir fig 1. A la figure 4, les moyens de roulement sont disposés selon deux niveaux 39, 40 de manière à assurer un déplacement linéaire et un positionnement constant de la face bombée du corps 23 par rapport au bâti.

Sur la figure 4, les moyens de roulement sont représentés schématiquement. D'une part, ils comprennent un évidement comme l'évidement 41 usiné dans la paroi 26 bis, et d'autre part un corps circulaire comme le corps 42. Pour un déplacement maximum de longueur H, on prévoit un évidement de hauteur moitié H/2 le corps à section circulaire 42 roulant sans glisser dans l'évidement ou rainure 41 et sur la face en regard de la tête proprement dite. La profondeur de l'évidement est prévue de manière à ce que le corps de la tête porte constamment sur un organe de roulement, c'est à dire dans la section de la figure 4, que la profondeur est inférieure au diamètre de la section de l'organe de roulement. Enfin, le fond de l'évidement reste constamment parallèle au déplacement de la tête pour garantir sa linéarité, les moyens de roulement 31, 33 du niveau 39 étant dupliqués 31a, 33a au niveau 40.

Selon l'invention, la force d'appui qu'exerce le ressort 29 disposé en regard de la face d'appui 26b sur la tête permet d'assurer un roulement sans glissement des organes de roulement, d'une part sur le corps 23, d'autre part sur les évidements comme l'évidement 41 dans les moyens de roulement. Le ressort 29 comporte une extrémité 29a liée à un point fixe du bâti et une extrémité 29b active sur une paroi mobile 26 qui porte aussi des moyens de roulement.

A la figure 5, on a représenté une vue de côté de la tête vue à la figure 4. Dans cette vue, la paroi fixe 27 est perpendiculaire au plan de l'entrefer qui est le plan de la figure (voir la vue de dessus figure 3). La face opposée 28 du bâti est mobile sous l'action du ressort 30 qui plaque le corps 23 sur l'organe de roulement 30 de référence. En position stable, l'axe de la tête est selon la direction médiane 43. Des moyens de roulement sont prévus pour permettre des angulations dans une limite restreinte entre deux positions comme les positions 44, 45. Ces oscillations permettent de rattraper éventuellement des gauchissements de la surface de la carte dans un plan perpendiculaire à la direction de défilement. Typiquement, les variations du plan sont de l'ordre de quelques minutes d'arc.

Afin de permettre cette rotation, des moyens de roulement sans glisser sont prévus sur un seul niveau 46. Préférentiellement, ce niveau est disposé le plus près possible de l'entrefer et donc de la carte.

Dans une version uniquement télescopique (sans oscillation) on peut ajouter une aiguille supplémentaire sur chaque face 27 et 28. Pour éviter les coincements du corps 23 dans le bâti, il est possible de répéter sur les faces 27 et 28 les dispositifs représentés sur les faces 26 et 26 bis. On aura alors en particulier placement de moyens et d'organes de roulement sur les deux niveaux 39, 40. Seul, un ressort agissant comme le ressort 35 applique la tête 23 sur la piste de la carte. On a donc une tête avec 8 aiguilles. On peut aussi, pour réduire les coûts ne conserver les moyens de l'invention que sur les faces parallèles au plan 24 d'entrefer, les deux faces perpendiculaires ne devant cependant recevoir aucun contact sur le bâti.

Dans un mode préféré de réalisation, les organes de roulement comme celui 42, sont constitués chacun par au moins une aiguille cylindrique allongée. L'évidement comme l'évidement 41 est alors constitué par un logement dans la face concernée du bâti dont l'épaisseur est inférieure au diamètre de la section circulaire de l'aiguille d'une part, et dont la hauteur dépend de la course de la tête. Dans cette disposition, les aiguilles au montage sont disposées de manière quelconque dans leur logement. Au cours de la première utilisation, il suffit d'exercer une première pression forte sur la tête pour que, grâce aux ressorts de rappel comme les ressorts 29 et 30, les aiguilles prennent leur place d'équilibre. Un tel dispositif présente donc l'intérêt particulier d'éviter des réglages laborieux des moyens de roulement qui assurent le réglage général de la tête.

Dans une première variante préférée, l'aiguille est tenue entre le fond de l'évidement dans la paroi du bâti et la face en regard de la tête mobile. Comme l'évidement est d'une hauteur supérieure au diamètre de l'aiguille, celle-ci est, à la mise en service, disposé de travers, son axe de rotation n'étant, en général, pas disposé dans la direction de la plus grande dimension de l'évidement. Tant que le mouvement reste télescopiques les aiguilles ont chacune tendance à se placer dans cette dernière direction où les réactions de l'aiguille sur ses faces de roulement sont minimales. Ainsi, la tête est automatiquement "armée" à la première lecture. Mais, si des oscillations azimutales autour de l'axe 43 de la figure 5 sont causées par des déformations de la carte, la rotation de la tête entraîne une déviation de l'axe de rotation de chacune des aiguilles qui se place en travers de l'évidement.

Dans un mode de réalisation, pour éviter que les oscillations azimutales soient freinées par le frottement des aiguilles dans leur déplacement, on réduit leur longueur et on double leur nombre dans chaque évidement. On réduit ainsi les surfaces en contact et donc l'importance des frottements.

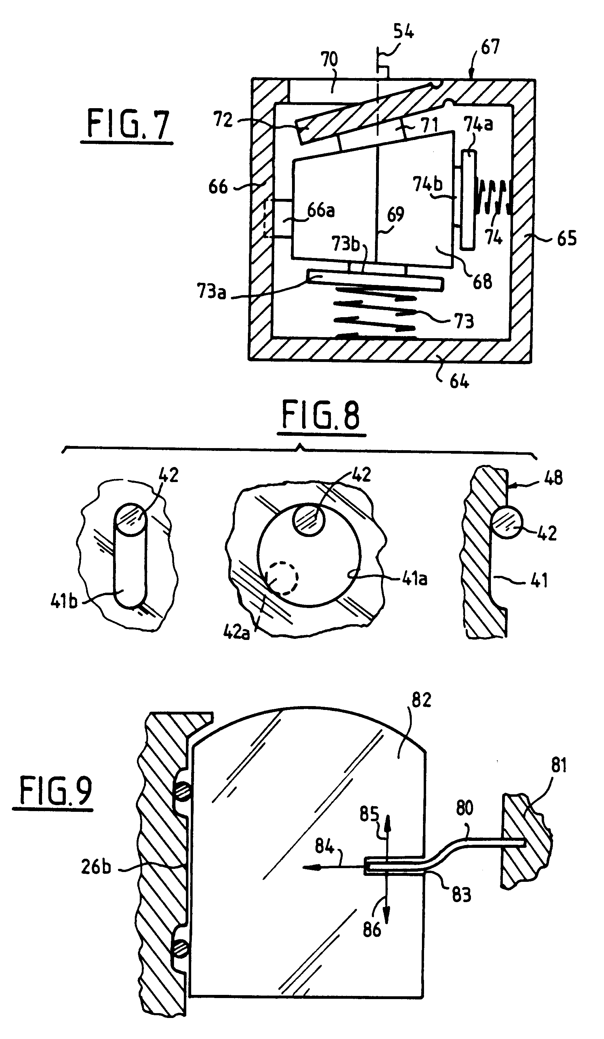

Dans un autre mode de réalisation où l'on désire obtenir l'annulation de ces frottements, les aiguilles sont remplacées par des billes sphériques. A la figure 8, on a représenté trois vues de moyens de roulement utilisant une bille par évidement. A la gauche du dessin, l'évidement 41 est en forme de trou oblong dont le grand axe est dirigé dans le sens du mouvement privilégié : celui de l'escamotage télescopique. La bille 42 est en position haute correspondant à une course extrême de la tête. Au centre du dessin, l'évidement 41 est une cuvette circulaire 41a qui, elle, permet un déplacement en roulement sans glisser de la bille 42 par exemple dans une position représentée en traits interrompus 42a qui correspond à une réaction azimutale au cours d'un escamotage télescopique. Les faces de référence du bâti doivent, sur chaque niveau de contact des organes de roulement, comporter au moins deux billes pour que les conditions d'équilibre soient respectées.

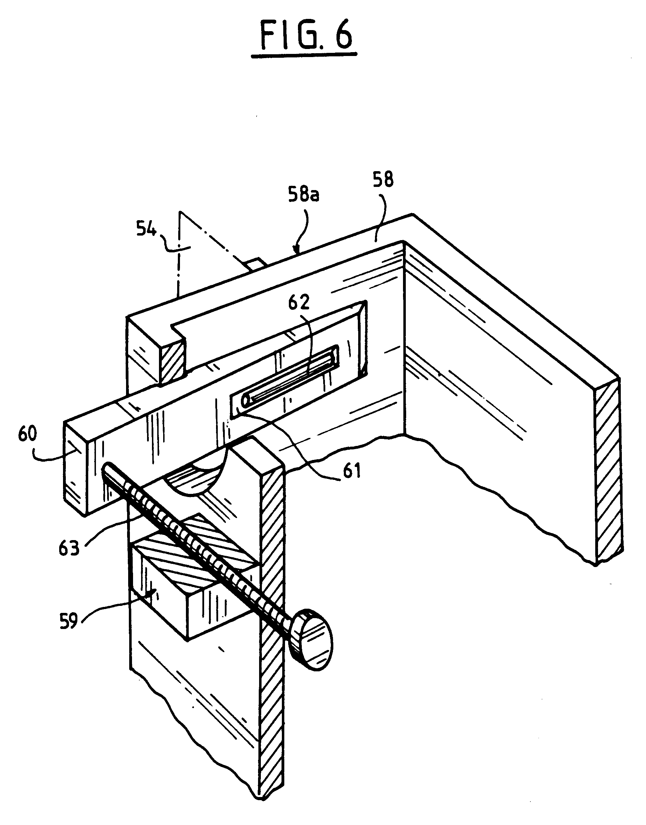

A la figure 6, on a représenté un schéma représentant un bâti de tête selon l'invention muni d'un organe d'orientation réglable de la zone d'appui d'un moyen de roulement. En effet, il est de la plus haute importance de garantir que la tête de lecture présentera une face externe 58a qui soit rigoureusement perpendiculaire au plan d'entrefer 54. Or, la face du corps de la tête qui est perpendiculaire au plan d'entrefer présente, selon les fabricants, des tolérances variables par exemple 10 minutes 40 minutes d'arc. Il faut donc corriger ces variations quand on installe le corps dans le bâti de la tête complète. L'invention propose un moyen simple, de mise en oeuvre très rapide. Sur une face de référence comme la face 58b, les moyens de roulement qui comportent chacun une aiguille 62 dans un évidement 61 sont disposés sur un doigt mobile 60. Le doigt mobile est constitué par une découpe de la paroi 58. La découpe elle-même est déformée de manière permanente bien au delà des valeurs à corriger, par exemple 1° d'arc. La découpe comporte une extrémité libre dirigée vers l'intérieur du bâti et une extrémité liée à la paroi 58 du bâti. Cette liaison peut être une articulation élastique constituée par une gorge perpendiculaire au plan de la correction par la découpe qui réalise une ligne de moindre résistance et donc une amorce de pliage.

Dans une paroi 59 perpendiculaire, et au droit de la découpe, on réalise un perçage lisse dans lequel on installe une vis partiellement filetée 63. La partie filetée est vissée dans un trou taraudé percé à l'extrémité libre du doigt mobile. On réalise le réglage en dévissant, ce qui a pour effet de réduire la déviation du doigt et permet de pallier l'inconvénient qui découle de la déformation de la tête.

Dans un mode de réalisation, l'articulation est constituée par une gorge, par exemple sur chaque face de la découpe 60, la gorge constituant un affaiblissement du matériau et donc un axe de pliage facilité pour la découpe 60, qui sert donc de réglage. La découpe dans un mode de réalisation préférée, est obtenue par moulage du bâti, le doigt étant, par la forme du moule, plié vers l'intérieur du bâti. La gorge de pliage, qui fournit une articulation souple de raideur déterminée est, elle aussi, obtenue par moulage.

A la figure 7, on a représenté un schéma de réalisation d'une variante de la figure 6. La tête est vue de dessus. Elle est composée d'un bâti à quatre faces 64, 65, 66, 67. La face 67 est choisie comme face de référence en vue de la fixation de la tête au lecteur. Afin d'amener le plan 54 de l'entrefer 69 à la perpendiculaire du plan de la paroi 67 extérieure au bâti, on a réalisé un organe d'orientation réglable composé d'un doigt 72 articulé de manière souple vers l'intérieur du bâti. L'articulation 72a présente une raideur déterminée de manière à équilibrer le ressort 73 de correction opposée. Cette articulation peut être réalisée par un affaiblissement de la ligne de pliage entre le doigt et le reste de la paroi 67 proprement dite. Le doigt 72 provient donc d'une découpe en fenêtre 70 de la paroi 67. On remarquera les moyens de roulement sur la paroi mobile 73a qui sont constitués par une aiguille 73b dans un évidement convenable de cette paroi 73a. L'aiguille 73b est disposée sensiblement au même niveau que l'aiguille 71 disposée dans un évidement du doigt 72, pour la raison déjà évoquée à la figure 5. Le doigt 72 est donc comme celui de la figure 6 de hauteur réduite, suffisante pour y pratiquer un évidement de hauteur moitié à l'excursion en escamotage du corps 68.

Les deux faces du corps 68 parallèles à l'entrefer (69) roulent sans glisser entre la paroi mobile 74a équipée de deux aiguilles comme l'aiguille 74b vue à la figure 7 et la paroi fixe 66 équipée de deux aiguilles comme l'aiguille 66a de la figure 7. Une correction de géométrie est moins nécessaire car la fabrication des corps comme le corps 68 permet une tolérance beaucoup plus serrée sur le parallèlisme des faces avec l'entrefer que celle des faces perpendiculaires. Mais, l'invention peut parfaitement s'appliquer pour des faces à parallèlisme avec le plan d'entrefer douteux en équipant la paroi 66 de deux doigts en découpe au niveau de chaque aiguille.

Enfin de manière préférentielle, le resort 30 est de raideur plus élevée que celui 29 permettant d'appuyer le corps 23 sur la face 26 bis du bâti. De même, l'aiguile des moyens de roulement sur la face 27 de la figure 5 ou de la figure 3 est plus longue que celle des autres moyens afin de privilégier le pivotement azimutal. La même disposition peut s'appliquer, mutadis mutandis, à la tête des figures 6 ou 7. En particulier quand l'invention est mise en oeuvre avec des billes comme organes de roulement, et dans le cas où le corps est réalisé dans un matériau susceptible d'être marqué par le roulement, l'invention prévoit que des bandes de roulement, dont l'état de surface peut améliorer encore les qualités mécaniques, sont déposées par des moyens connus de l'art antérieur en regard des organes de roulement. On augmente la longévité de la tête en évitant son usure par marquage.

## Revendications

1. Tête magnétique pour lecteur de cartes à piste magnétique du type télescopique, du type comportant un corps (23) mobile dans un bâti (26, 27, 28), le bâti contenant au moins un premier moyen de roulement (30) sans glissement le long d'un chemin de roulement sur au moins une face (25) de la tête et des premiers moyens de rappel élastique (300) destinés à assurer le rappel de la tête vers une face de référence (25a) du bâti, ledit bâti comportant une deuxième face (26b), perpendiculaire à la face de référence (25a) qui porte des seconds moyens de roulement (31) caractérisée en ce que ledit bâti comporte également une face mobile (26) qui porte des troisièmes moyens de roulement (33), cette face mobile (26) et ces troisièmes moyens de roulement (33) étant appuyés constamment sur le corps de la tête par un second moyen de rappel élastique (29), les seconds moyens de roulement sans glissement disposés sur la deuxième face (26b) perpendiculaire à la face de référence sont sur deux niveaux (39, 40), le bâti comporte deux faces parallèles (27,28) dans des plans perpendiculaires au plan d'entrefer, une première face fixe (27) et une seconde face mobile (28) soumise à l'action des moyens de rappel élastique (300), chaque face comportant au même niveau (46), au moins un moyen de roulement sans glissement (30 ou 32), le bâti est muni d'une butée (38) disposée sur la sortie de la deuxième face (26b) de manière à limiter la course de l'escamotage télescopique de la tête sollicitée par un troisième moyen élastique (35; 80) vers la carte.

2. Tête magnétique selon la revendication l, caractérisée en ce que l'évidement (41) de chaque moyen de roulement comporte une dimension égale à la moitié de la course maximale dans la direction de l'escamotage télescopique.

3. Tête magnétique selon la revendication 1 ou 2, caractérisée en ce que, pour rattraper des erreurs de géométrie de la tête, le bâti comporte sur au moins une partie fixe (58) et au moins en regard d'un chemin de roulement, un organe d'orientation réglable (60) de la zone d'appui du moyen de roulement (61, 62), et dont la déformation initiale est au moins égale à la plus forte erreur de géométrie du corps à corriger.

4. Tête magnétique selon la revendication 3, caractérisée en ce que l'organe d'orientation réglable est constitué par une découpe (66) en fenêtre au droit de l'appui entre l'organe de roulement (67) et le corps (68) de la tête, dont une première extrémité est libre et mobile sous l'effet d'un moyen de réglage (63) de la déformation, et une seconde extrémité est solidaire du bâti.

5. Tête selon la revendication 4 caractérisée en ce que le moyen de réglage de l'orientation est constitué par une vis (63) mobile dans un trou taraudé du bâti (59) dont l'extrémité (65) vient repousser l'extrémité libre de la découpe (66) vers l'extérieur du bâti.

6. Tête magnétique selon la revendication 4, caractérisée en ce que le moyen de réglage de l'orientation est constitué par une vis (63) mobile dans un alésage lisse du bâti (59) et dont l'extrémité repousse l'extrémité libre de la découpe articulée de manière élastique vers l'intérieur du bâti.

7. Tête selon la revendication 4, 5 ou 6, caractérisée en ce que l'articulation de la seconde extrémité liée au bâti de la découpe (60) est constituée par au moins une gorge de direction perpendiculaire au plan du déplacement de la découpe (60 ou 66).

**8.** Tête selon l'une des revendications précédentes, caractérisée en ce que chaque organe de roulement est constitué par au moins une aiguille cylindrique disposée dans un logement du bâti au droit du chemin de roulement prévu sur le corps de la tête.

**9.** Tête selon la revendication 8 et la revendication 5, caractérisée en ce que pour favoriser les mouvements en azimut, seule l'aiguille disposée sur la face fixe du bâti et perpendiculaire au plan de l'entrefer s'étend sur la plus grande partie de la face en regard du corps de la tête, et en ce que le ressort (29) de rappel qui lui est opposé est de raideur inférieure à celui du ressort (35) destiné au rappel de la correction télescopique.

**10.** Tête magnétique selon la revendication 1, caractérisée en ce que l'organe de roulement est constitué par une bille (42) de manière à réaliser un roulement aussi bien en escamotage télescopique qu'en correction azimutale.

**11.** Tête magnétique selon la revendication 10, caractérisée en ce que l'évidement destiné à la bille est un trou oblong (41b) dont le grand axe est dans la direction de l'escamotage télescopique et dont la longueur est égale à la moitié de l'amplitude d'escamotage prévu.

**12.** Tête magnétique selon la revendication 11, caractérisée en ce que l'évidement destiné à la bille est une cuvette cylindrique (41a) dans laquelle la bille peut prendre sans glisser toutes positions au cours des mouvements d'escamotage télescopique et de correction azimutale.

**13.** Tête magnétique selon la revendication 1, caractérisée en ce que chaque organe de roulement est maintenu par une cage liée au bâti.

**14.** Tête selon la revendication 1, caractérisée en ce que le mouvement d'escamotage télescopique est assuré par un ressort (35) qui travaille en compression entre une face (36) de la tête et le fond (37) du bâti.

**15.** Tête magnétique selon la revendication 1, caractérisée en ce que le troisième moyen élastique assurant le mouvement d'escamotage télescopique est assuré par un ressort (80) qui travaille en flexion entre une première extrémité libre engagée dans une encoche (83) d'une face du corps (82) et une seconde extrémité fixée à une face fixe (81) du bâti.

**16.** Tête magnétique selon la revendication 1, caractérisée en ce que pour éviter le marquage des chemins de roulement sur le corps, des bandes de roulement en matériau dur sont déposées en regard des organes de roulement sur la surface externe du corps.

**17.** Tête magnétique selon la revendication 1, caractérisée en ce que le bâti est obtenu par moulage.

**18.** Tête magnétique selon les revendications 17 et 3, caractérisée en ce que la découpe et l'organe d'orientation réglable sont aussi obtenus par moulage.

**Claims**

**1.** A magnetic head for a reader of cards having a magnetic track of the telescopic type, of the type comprising a body (23) which is movable in a frame (26, 27,28), the frame containing at least a first means (30) for rolling without sliding along a rolling path on at least one face (25) of the head and first elastic return means (300) intended to ensure the return of the head towards a reference face (25a) of the frame, said frame comprising a second face (26b), perpendicular to the reference face (25a) which carries second rolling means (31), characterised in that said frame also comprises a movable face (26) which carries third rolling means (33), this movable face (26) and these third rolling means (33) being constantly pressed on the body of the head by a second elastic return means (29), the second means for rolling without sliding arranged on the second face (26b) perpendicular to the reference face are on two levels (39,40), the frame comprises two parallel faces (27, 28) in planes perpendicular to the air gap plane, a first fixed face (27) and a second movable face (28) subjected to the action of the elastic return means (300), each face comprising at the same level (46) at least one means (30 or 32) for rolling without sliding, the frame is provided with a stop (38) arranged on the outlet of the second face (26b) so as to limit the course of telescopic retraction of the head, acted upon by a third elastic means (35;80) towards the card.

**2.** A magnetic head according to claim 1, characterised in that the cavity (41) of each rolling means has a dimension equal to half the maximum course in the direction of telescopic retraction.

3. A magnetic head according to claim 1 or 2, characterised in that, to take up errors of geometry of the head, the frame comprises on at least one fixed part (58) and at least facing a rolling path, an adjustable orientation member (60) of the support zone of the rolling means (61, 62), and the initial deformation of which is at least equal to the greatest error in geometry of the body which is to be corrected.

4. A magnetic head according to claim 3, characterised in that the adjustable orientation member is constituted by a window cut-out (66) perpendicular to the support between the rolling member (67) and the body (68) of the head, a first end of which is free and movable under the effect of a means (63) for adjustment of deformation, and a second end is integral with the frame.

5. A head according to claim 4, characterised in that the means for adjustment of orientation is constituted by a screw (63) which is movable in a tapped hole of the frame (59), the end (65) of which comes to repel the free end of the cut-out (66) towards the exterior of the frame.

6. A magnetic head according to claim 4, characterised in that the means for adjustment of orientation is constituted by a screw (63) which is movable in a smooth bore of the frame (59) and the end of which repels the free end of the cut-out articulated in an elastic manner towards the interior of the frame.

7. A head according to claim 4, 5 or 6, characterised in that the articulation of the second end connected to the frame of the cut-out (60) is constituted by at least one groove of a direction perpendicular to the plane of displacement of the cut-out (60 or 66).

8. A head according to one of the preceding claims, characterised in that each rolling member is constituted by at least one cylindrical needle arranged in a housing of the frame perpendicular to the rolling path provided on the body of the head.

9. A head according to claim 8 and claim 5, characterized In that to promote the azimuthal movements, only the needle arranged on the fixed face of the frame and perpendicular to theair gap plane extends over the greatest part of the face opposing the body of the head, and in that the return spring (29) which is opposed thereto is less tight than thee spring (35) intended for return of the telescopic correction.

10. A magnetic head according to claim 1, characterized in that the rolling member is constituted by a ball (42) so as to bring about a rolling both in telescopic retraction and in azimuthal correction.

11. A magnetic head according to claim 10, characterised in that the cavity intended for the ball is an oblong hole (41b), the large axis of which is in the direction of telescopic retraction and the length of which is equal to half the amplitude of retraction provided.

12. A magnetic head according to claim 11, characterised in that the cavity intended for the ball is a cylindrical dish (41a), in which the ball may, without sliding, take all the positions in the course of the movements of telescopic retraction and azimuthal correction.

13. A magnetic head according to claim 1, characterised in that each rolling member is held by a cage connected to the frame.

14. A head according to claim 1, characterised in that the movement of telescopic retraction is ensured by a spring (35) which operates in compression between a face (36) of the head and the bottom (37) of the frame.

15. A magnetic head according to claim 1, characterised in that the third elastic means ensuring the movement of telescopic retraction is ensured by a spring (80) which operates in deflection between a first free end engaged in a slot (83) of a face of the body (82) and a second end fixed to a fixed face (81) of the frame.

16. A magnetic head according to claim 1, characterised in that to avoid the marking of the rolling paths on the body, rolling strips of hard material are arranged facing the rolling members on the outer surface of the body.

17. A magnetic head according to claim 1, characterised in that the frame is obtained by moulding.

18. A magnetic head according to claims 17 and 3, characterised in that the cut-out and the adjustable orientation member are also obtained by moulding.

**Patentansprüche**

1. Magnetkopf von Teleskop-Bauart zum Lesen von Magnetstreifenkarten, von einer Bauart, die einen in einm Rahmen (26, 27, 28) beweglichen Körper (23) aufweist, wobei der Rahmen wenigstens ein erstes Mittel (30) zum gleitfreien Rollen entlang eines Rollweges auf wenigstens einer Seite (25) des Kopfes und erste elastische Rückstellmittel (30), die dazu bestimmt sind, die Rückstellung des Kopfes in Richtung einer Bezugsseite (25a) des Rahmens zu gewährleisten, enthält, wobei der Rahmen eine zur Bezugsseite (25a) senkrechte zweite Seite (26b) aufweist, die zweite Rollmittel (31) trägt, dadurch gekennzeichnet, daß der Rahmen gleichermaßen eine bewegliche Seite (26) mit dritten Rollmitteln (33) aufweist, wobei sich diese bewegliche Seite (26) und diese dritten Rollmittel (33) ständig mittels eines zweiten elastischen Rückstellmittels (29) am Kopfkörper abstützen und wobei sich die zweiten Mittel zum gleitfreien Rollen, die auf der zur Bezugsseite senkrechten zweiten Seite (26b) angeordnet sind, auf zwei Niveaus (39, 40) befinden, daß der Rahmen in zur Luftspalt-Ebene senkrechten Ebenen zwei parallele Seiten (27, 28) aufweist, eine erste feste Seite (27) und eine zweite bewegliche Seite (28), die der Wirkung von elastischen Rückstellmitteln (300) unterliegt, wobei jede Seite auf gleichem Niveau (46) wenigstens ein Mittel zum gleitfreien Rollen (30 oder 32) aufweist, und daß der Rahmen mit einem Anschlag (38) versehen ist, der am Ende der zweiten Seite (26b) so angeordnet ist, daß er den Weg der teleskopischen Verschiebung des Kopfes, der von einem dritten elastischen Mittel (35; 80) in Richtung der Karte belastet ist, begrenzt.

2. Magnetkopf gemäß Anspruch 1, dadurch gekennzeichnet, daß die Aussparung eines jeden Rollmittels eine Größe besitzt, die gleich der Hälfte des Maximalweges in Richtung der teleskopischen Verschiebung ist.

3. Magnetkopf gemäß Anspruch 1 oder 2, dadurch gekennzeichnet, daß der Rahmen zur Beseitigung von Fehlern der Geometrie des Kopfes an wenigstens einem festen Teil (58) und wenigstens gegenüber einem Rollweg ein einstellbares Element (60) für die Ausrichtung der Abstützzone des Rollmittels (61, 62) aufweist, wobei die Anfangsverformung des einstellbaren Ausrichtelementes wenigstens gleich dem größten zu korrigierenden Fehler der Geometrie des Körpers ist.

4. Magnetkopf gemäß Anspruch 3, dadurch gekennzeichnet, daß das einstellbare Ausrichtelement von einem rechtwinklig zur Abstützzone zwischen dem Rollelement (67) und dem Körper (68) des Kopfes orientierten Fensterausschnitt (66) gebildet wird, von dem ein erstes Ende frei und unter der Wirkung eines Verformungs-Einstellmittels (63) beweglich ist und ein zweites Ende mit dem Rahmen verbunden ist.

5. Kopf gemäß Anspruch 4, dadurch gekennzeichnet, daß das Ausricht-Einstellmittel von einer Schraube (63) gebildet wird, die in einem mit einem Gewinde versehenen Loch des Rahmens (59) beweglich ist, wobei das Ende (65) der Schraube (63) das freie Ende des Ausschnitts (66) in einer aus dem Rahmen hinausweisenden Richtung treibt.

6. Magnetkopf gemäß Anspruch 4, dadurch gekennzeichnet, daß das Ausricht-Einstellmittel von einer Schraube (63) gebildet wird, die in einer glatten Bohrung des Rahmens (59) beweglich ist, wobei das Ende der Schraube (63) das freie Ende des elastisch schwenkbaren Ausschnitts in einer in den Rahmen hineinweisenden Richtung treibt.

7. Kopf gemäß Anspruch 4, 5 oder 6, dadurch gekennzeichnet, daß die Schwenkeinrichtung des mit dem Rahmen verbundenen zweiten Endes des Ausschnitts (60) von wenigstens einer Austiefung in einer zur Verschiebungsebene des Ausschnitts (60 oder 66) senkrechten Richtung gebildet wird.

8. Kopf gemäß einem der vorangehenden Ansprüche, dadurch gekennzeichnet, daß jedes Rollelement von wenigstens einer zylindrischen Nadel gebildet wird, die in einem Aufnahmesitz des Rahmens angeordnet ist, der rechtwinklig zum auf dem Kopfkörper vorgesehenen Rollweg orientiert ist.

9. Kopf gemäß Anspruch 8 und Anspruch 5, dadurch gekennzeichnet, daß sich zur Bevorzugung der Azimut-Bewegungen nur die in der festen Seite des Rahmens angeordnete und senkrecht zur Luftspaltebene orientierte Nadel über den größten Teil der Seite gegenüber dem Kopfkörper erstreckt und daß die ihr gegenüberliegende Rückstellfeder (29) einen Radius besitzt, der kleiner als derjenige der Feder (35) ist, die zur Rückstellung der Teleskop-Korrektur bestimmt ist.

10. Magnetkopf gemäß Anspruch 1, dadurch gekennzeichnet, daß das Rollelement von einer Kugel (42) gebildet wird, derart, daß ein Rollen sowohl in Richtung der teleskopischen Verschiebung als auch in Richtung der Azimut-Korrektur verwirklicht wird.

11. Magnetkopf gemäß Anspruch 10, dadurch gekennzeichnet, daß die für die Kugel vorgesehene Aussparung ein längliches Loch (41b) ist, dessen große Seite in Richtung der teleskopischen Verschiebung weist und dessen Länge gleich der Hälfte der vorgesehenen Verschiebungsamplitude ist.

12. Magnetkopf gemäß Anspruch 11, dadurch gekennzeichnet, daß die für die Kugel vorgesehene Aussparung eine zylindrische Mulde (41a) ist, in der die Kugel ohne zu gleiten sämtliche Positionen im Verlauf der Bewegungen der teleskopischen Verschiebung und der Azimut-Korrektur annehmen kann.

13. Magnetkopf gemäß Anspruch 1, dadurch gekennzeichnet, daß jedes Rollelement von einem mit dem Rahmen verbundenen Käfig gehalten wird.

14. Kopf gemäß Anspruch 1, dadurch gekennzeichnet, daß die Bewegung der teleskopischen Verschiebung durch eine Feder (35) gewährleistet wird, die zwischen einer Seite <36) des Kopfes und dem Boden <37) des Rahmens als Druckfeder wirkt.

15. Magnetkopf gemäß Anspruch 1, dadurch gekennzeichnet, daß das dritte elastische Mittel, das die Bewegung der teleskopischen Verschiebung gewährleistet, von einer Feder (80) gebildet wird, die zwischen einem ersten freien Ende, das in einer Aussparung (83) einer Seite des Körpers (82) in Eingriff ist, und einem zweiten, an einer festen Seite (81) des Rahmens befestigten Ende als Biegefeder wirkt.

16. Magnetkopf gemäß Anspruch 1, dadurch gekennzeichnet, daß gegenüber den Rollelementen an der Außenoberfläche des Körpers Rollbänder aus einem harten Material angebracht werden, um ein Auftreten von Spuren auf den Rollwegen zu vermeiden.

17. Magnetkopf gemäß Anspruch 1, dadurch gekennzeichnet, daß der Rahmen durch Formgießen erhalten wird.

18. Magnetkopf gemäß den Ansprüchen 17 und 3, dadurch gekennzeichnet, daß der Ausschnitt und das einstellbare Ausricht-Element ebenfalls durch Formgießen erhalten werden.

## FIG.1

## FIG. 2a

## FIG. 2b

## FIG.2c

# FIG. 4

# FIG. 5

# FIG. 3

EP 0 278 195 B1

# FIG. 6

13

## FIG.7

## FIG.8

## FIG.9